(19) Europäisches Patentamt
European Patent Office
Office européen des brevets

(11) Publication number: 0 216 412 B1

(12) # EUROPEAN PATENT SPECIFICATION

(45) Date of publication of the patent specification: 02.05.90

(51) Int. Cl.⁴: C08K 5/00, C08L 23/02 // (C08K5/00, 5:07, 5:39)

(21) Application number: 86201468.5

(22) Date of filing: 26.08.86

(54) Photodegradant compositions and photdegradable polymer compositions made therefrom.

(30) Priority: 28.08.85 GB 8521382
14.10.85 NL 8502798

(43) Date of publication of application: 01.04.87 Bulletin 87/14

(45) Publication of the grant of the patent: 02.05.90 Bulletin 90/18

(84) Designated Contracting States: AT BE CH DE FR GB IT LI LU NL SE

(56) References cited:
US-A-3 454 510
US-A-3 856 747
US-A-4 121 025

(73) Proprietor: AKZO N.V., Velperweg 76, NL-6824 BM Arnhem(NL)

(72) Inventor: Cooray, Bulathsinhalage Boyd, 11, Broadoak Road, Bamford Rochdale(GB)

(74) Representative: Sieders, René et al, AKZO N.V. Patent Department (Dept. CO) P.O. Box 9300, NL-6800 SB Arnhem(NL)

EP 0 216 412 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to photodegradant compositions comprising a photodegradant compound and a photostabilizer compound. This invention also relates to photodegradable polymer compositions comprising a polymer and a photodegradant composition.

Such compositions are known from GB 1 586 344. That patent addresses the problem of manufacturing photodegradable polymer compositions.

In the manufacture of polymeric materials such as polyolefins, manufacturers have typically attempted to improve the light stability of their products so that they may be used in outdoor application without premature failure. However, for some applications, improved light stability is not desired. In fact, in some instances it is desired to have the polymer photodegrade faster than if no additives were present.

One such example in agriculture is the use of polyethylene sheets to prevent weed growth and water evaporation between rows of plants. If the polymer is light-stable, it will be necessary to manually remove the sheets prior to plowing. But, if the polymer becomes brittle due to the action of sunlight (principally the ultra-violet light), the sheets may be plowed into the soil where they will be biodegraded.

Another example is packaging materials. Most packaging materials are used for a very short period of time, after which they are discarded, causing litter or other disposal/environmental problems. Untreated polymers may remain in the environment for very long periods of time (perhaps hundreds of years) if their ultra-violet exposure is brief and they are then buried. However, if they are treated with a photodegradant, the embrittlement time will be reduced, for example, from 3 to 5 years for untreated plastics, to only several months for plastics containing photo degradants. Thus, such a treated plastic will, after a relatively brief ultra-violet exposure, become photodegraded to the point that it may be biodegraded.

GB 1 586 344 is directed specifically at formulating a photodegradable polymer composition which has a controllable and predictable ultra-violet life, followed by rapid photodegradation. The solution presented by this patent is to blend carefully controlled ratios of a photodegradant complex of an organic ligand with iron, manganese, or cerium, with a photostabilizer complex of the same or different ligand with nickel, cobalt, or copper. These blends are then incorporated into the polymer to achieve the desired photostable lifetime. While this system appears to be operable, it suffers from several disadvantages including undesirable color, corrosion of processing equipment, polymer degradation, lack of polymer compatability, and loss of polymer mechanical properties.

The present invention does not have these disadvantages, and is characterized in that the photodegradant compound is a complex of copper and a ketone having an α-hydrogen available such that the ketone may form a keto-enol tautomer and the photostabilizer compound is a complex of zinc and an alkyldithio acid; the photodegradant and photostabilizer compounds being present in a ratio of 5:95 to 95:5.

The present invention is advantageous in that polymer compositions containing the photodegradant compositions, among other things, do not have undesirable color, have excellent photodegradation properties, and are process stable.

Considering more generally the state of the art, several other patents are relevant.

US 3 454 510 discloses the general concept of incorporating photodegradants into opaque polymer films for agricultural use. This patent mentions that useful pro-oxidants include the acetylacetonates of manganese, cobalt, chromium, copper, and vanadium. No mention is made of adding photostabilizers.

US 4 048 410 addresses the problem of photodegradant induced processing instability by incorporating into the polymer, not the photodegradant itself, but rather incorporating precursors (ligands) of the photodegradant with the expection that the precursor will react with a suitable metal (no metals are specified, but iron is implied by a reference to rusty metal) in the environment to form the disired degradant. However, for this approach to be successful outside the laboratory requires that a suitable source of metal ions be made available in contact with the article to be degraded.

GB 1 356 107 (referred to in the aforementioned GB 1 586 344) discloses a number of photodegradant complexes, either or both of the complex or the complexing agent being an antioxidant. This patent discloses a mixture of zinc dibutylthiocarbamate and iron dibutylthiocarbamate. The corresponding US Patent (US 4 121 025) discloses a mixture of zinc dibutyldithiocarbamate and copper stearate.

One component of the invention is a photogradant compound. By the term "photodegradant compound" is meant a compound which, when blended with a polymer, will cause the polymer to degrade, upon exposure to light, faster than if the compound were not present. The photodegradant compound should be compatible with the other components. By the term "compatible" is meant that the compound may be blended with the other components without significant separation or destructive reaction of the components. While this does not require that the components be soluble in one another, they should at least be capable of forming a uniform, finely dispersed mixture.

Specifically, the photodegradant compound is a complex of copper and a ketone having an α-hydrogen available such that ketone can form a keto-enol tautomer.

Desirably, the ketone has more than one carbonyl group, more desirably two carbonyl groups (a diketone). Suitable ketones having more than one carbonyl group include those having the structures

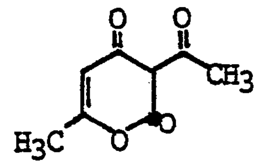

and

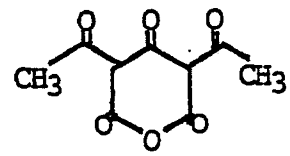

Preferred diketones have the structure

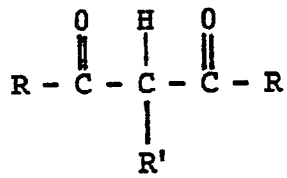

wherein each R is selected independently from a $C_1$ to $C_{18}$ or – for R'=H – from a $C_1$ to $C_{22}$ organic group, desirably a $C_1$ to $C_{12}$ alkyl or aralkyl group. Preferably each R is a $C_1$ to $C_6$, still more preferably a $C_1$ to $C_3$, still more preferably a $C_1$ to $C_2$, and most preferably a $C_1$, alkyl group. R' is desirably hydrogen or a $C_1$ to $C_{18}$ organic group, preferably hydrogen. Of course, the organic portion of the ketone may contain a variety of substitutions, and mixtures of ketones may be used. The most preferred photodegradant compound is copper 2,4-pentanedioe (= copper acetylacetonate).

A second component of the invention is a photostabilizer compound. By the term "photostabilizer compound" is meant a compound which will cause a polymer to which it is added to degrade, upon exposure to light, less than if the compound were not present. The photostabilizer compound should be "compatible" which the other components, as defined above.

Specifically, the photostabilizer compound is a complex of zinc and a dithio acid. By the term "dithio acid" is meant an organic compound having a dithio acid group of carbon, phosphorous, or nitrogen (preferably carbon or phosphorous). Suitable dithio acids include those having the structure

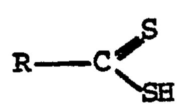

wherein R is a $C_1$ to $C_{22}$ organic group.

Desirable dithio acids are dialkyldithiocarbamic acids, dialkyldithiophosphoric acids, and alkylxanthic acids, with dialkyldithiocarbamic acids being greatly preferred. In the alkyldithio acids each alkyl group is desirably a $C_1$ to $C_{22}$, more desirably a $C_1$ to $C_6$, preferably a $C_1$ to $C_3$, more preferably a $C_1$ to $C_2$, and most preferably a $C_1$, alkyl group. The most preferred photostabilizer compound is zinc dimethyldithiocarbamic acid.

The photodegradant compound and photostabilizer compound are present in a ratio such that when blended with a polymer, the polymer exhibits a synergistic photodegradation effect and a synergistic process stability effect. By the phrase "synergistic photodegradation effect" is meant that the polymer is more photodegradable than would be expected from an averaging of the effects of the presencce of the photodegradation and photostabilizer compounds alone. By the phrase "synergistic process stability effect" is meant that the polymer is more process stable than would be expected from an averaging of the effects of the presence of the photodegradation and photostabilizer compounds alone. While the precise ratios to be used may vary with factors such as the molecular weight of the compounds, generally the two compounds are present in a ratio of 95:5, to 5:95, desirably 90:10 to 10:90, preferably 70:30 to 30:70, more preferably 60:40 to 40:60, most preferably about 50:50.

The practice of the invention contemplates that the photostabilizer and photodegradant compounds

will be added to a polymer, preferably a polyolefin. By "polyolefin" is meant a polymer of one or more ethylenically unsaturated organic compounds, desirably principally (e.g.: at least 50 mole %) α-olefins (1-alkenes). Preferably polymer is polyethylene, polypropylene, or poly(1-butene); more preferably polyethylene or polypropylene; still more preferably polyethylene, and most preferably low density polyethylene. The polymer is preferably free of groups such as halogens, which could interfere with the action of the photodegradant composition.

The photostabilizer and photodegradant may be combined and added to the polymer, or may be separately added, the former being preferred. The compounds may be blended with the polymer using conventional means such as are well known in the art.

The photodegradant composition (i.e.: the photodegradant compound and the photostabilizer compound) is present in the polymer in an amount such that the polymer exhibits a synergistic photodegradation effect and a synergistic process stability effect, as those terms have been hereinbefore defined. Although the precise quantity to be used may vary with such factors as the molecular weight of the compounds and the nature of the polymer, in general, the photodegradant composition will be present at 0.001 to 1, more desirably 0.01 to 0.1 weight percent, based on the weight of the polymer.

The polymer may also contain other additives such as fillers, lubricants, dyes, pigments, anti-static agents, etc.

The polymers may be used for a wide variety of applications where a photodegradant is desired, including agricultural ground covers and industrial and consumer packaging. The invention is particularly suited for use in consumer packaging. This well-known application demands a polymer that will be of high quality during the period of use (i.e. one that was not degraded during manufacturing), but which will be readily photodegradable. For instance, the polymers of the invention may be used to produce clear sheets for display packages of consumer articles. In contrast, the polymers of GB 1 356 107 and GB 1 586 344 would not be suitable for such a use because of their color.

The polymer may be made in a variety of forms such as fibers, sheets (preferably less than 2 mm thick), and shaped articles such as bottles and other containers.

The invention is further illustrated by the following examples.

Example 1

Zinc dimethyldithiocarbamate was prepared by the room temperature addition and stirring of two gram moles of aqueous sodium dimethyldithiocarbamate to an aqueous solution of a gram mole of zinc sulphate heptahydrate, causing the precipitation of a white solid which was filtered and washed with warm water (60°C).

The white solid was recrystallised from n-heptane to yield fine powder in 95-97% yield. Elemental analysis, IR, and NMR spectroscopy data were in good agreement with literature values for zinc dimethyldithiocarbamate.

Copper acetylacetonate was prepared by the room temperature interaction of aqueous copper sulphate heptahydrate (19 mole) with acetyl acetone (29 moles) under rigorous stirring in the presence of sodium acetate trihydrate. A grey solid was precipitated in 98% crude yield. The solid was filtered, washed with water and vacuum dried at 50°C to a constant dry weight. Elemental analysis, IR, and NMR spectroscopy data were in good agreement with literature values for copper acetylacetonate.

Low-density polyethylene (ICI, Alkathene 017/040) was compound with additives shown in Table I by mixing the composition on a two-roll mill at 120°C for 5 minutes with frequent cross-blending. The homogeneous polymer composition was then compression molded to yield polymer films in the thickness range 10-125 μm.

The polymer films of a selected thickness and composition were mounted on a sheet of stiff white paper and placed in suitable sample holders for placement in a Xenotest accelerated UV exposure cabinet and the exposure time to cause polymer embrittlement was monitored by attenuated total reflection IR spectroscopy and by crack development, growth, and propagation. A linear co-relation between these observations and the time taken to cause embrittlement by flexing the polymer film was obtained through a series of separate experiments.

Table I, illustrates the relationship between polymer composition and UV embrittlement time for a film thickness of 25 μm. Similar trends were observed at both higher and lower film thicknesses.

| Sample | Additive (1) | | Additive Concentration (weight percent) | Embrittlement time (hours) |
|---|---|---|---|---|
| 1* | none | | - | 2300 |
| 2* | ZDC | | 0.05 | > 3000 |
| 3* | CAA | | 0.05 | 800 |
| 4 | ZDC 90% | CAA 10% | 0.05 | 1200 |
| 5 | ZDC 80% | CAA 20% | 0.05 | 950 |
| 6 | ZDC 70% | CAA 30% | 0.05 | 920 |
| 7 | ZDC 60% | CAA 40% | 0.05 | 940 |
| 8 | ZDC 50% | CAA 50% | 0.05 | 940 |
| 9 | ZDC 40% | CAA 60% | 0.05 | 940 |
| 10 | ZDC 20% | CAA80% | 0.05 | 820 |
| 11 | ZDC 10% | CAA 90% | 0.05 | 805 |
| 12 | ZDC 80% | CAA 20% | 0.1 | 950 |
| 13 | ZDC 60% | CAA 40% | 0.1 | 940 |
| 14 | ZDC 20% | CAA 80% | 0.1 | 830 |

* Not an example of the invention

(1) ZDC = zinc•dimethyldithiocarbamate

CAA = copper•2,4-pentadione

These results show that a synergistic effect is achieved in the practice of the invention. Specifically, the data show that combinations of ZDC and CAA yield an embrittlement time almost as low as when CAA is used alone. This is the case even when the ZDC to CAA ratio is 9:1. The embrittlement time is less than would be expected from an averaging of the effect of the presence of ZDC and CAA alone.

Example 2

The polymer compositions compounded on the two-roll mill at 120°C in Example 1, were used to determine the Melt Flow Index of the polymer under standard conditions at 190°C.

The results are reported in Table II.

TABLE II

| Sample | Additive (1) | Melt Flow Index (2) | Expected Value(3) |
|---|---|---|---|
| 1* | none | 7.00 | - |
| 2* | ZDC | 7.30 | - |
| 3* | CAA | 8.82 | - |
| 4 | ZDC 80%/CAA 20% | 7.40 | 7.60 |
| 5 | ZDC 40%/CAA 60% | 7.36 | 8.21 |

* Not an example of the invention

(1) total concentration, 0.1 percent

(2) g/10 min at 190°C. Higher values mean more polymer degradation.

(3) weighted average of separate values.

These results show a second synergistic effect of the invention. In this example, the data show that a combination of ZDC and CAA provide processing stability which is very close to that obtained using ZDC alone. This would not be expected from an averaging of the effects of the presence of ZDC and CAA alone.

Comparative Example

The procedure of Example 2 was repeated, using zinc and iron dibutyldithiocarbamate, as suggested by GB 1 356 107. The results are shown in Table II-C

TABLE II-c

| Sample | Additive | Melt Flow Index | Expected Value |
|---|---|---|---|
| C-2* | ZDBTC | 7.38 | - |
| C-3* | FeDBTC | 9.8 | - |
| C-4* | ZDBTC 80%/FeDBTC 20% | 8.4 | 7.9 |
| C-5* | ZDBTC 40%/FeDBTC 60% | 8.8 | 8.8 |

* Not an example of the invention

In contrast to Example 2, these data show that a combination of ZDBTC and FeDBTC have a processing degradation value equal to or worse than expected from averaging the effects of the presence of each alone.

**Claims**

1. A photodegradant composition comprising a photodegradant compound and a photostabilizer compound wherein

a. the photodegradant compound comprises a complex of (i) copper, and (ii) a ketone having more than one carbonyl group and an α-hydrogen available such that the ketone may form a keto-evol tautomer;
b. the photostabilizer compound comprises a complex of (i) zinc, and (ii) an alkyldithio acid; and
c. the photodegradant compound and the photostabilizer compound are present in relative weight proportion of 5:95 to 95:5.

2. A composition according to claim 1 wherein the ketone is a diketone.

3. A composition according to claim 2 wherein the diketone has the structure

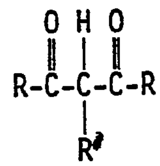

wherein each R is selected independently from a $C_1$ to $C_{18}$ or – for R′=H – from a $C_1$ to $C_{22}$ organic group and R′ is selected from hydrogen and a $C_1$ to $C_{18}$ organic group.

4. A composition according to claim 3 wherein the diketone has the structure

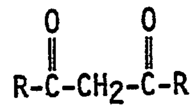

wherein each R is selected independently from a $C_1$ to $C_{22}$ organic group.

5. A composition according to claim 3 wherein each R is selected independently from a $C_1$ to $C_6$ alkyl group.

6. A composition according to claim 5 wherein the photodegradant is copper acetylacetonate.

7. A composition according to any one of the preceding claims wherein component (ii) of the photostabilizer is a dialkyldithiocarbamic acid.

8. A composition according to claim 7 wherein the photostabilizer is zinc dimethyldithiocarbamate.

9. A photodegradable polymer composition comprising a polymer and from 0.001 to 1 weight percent of a photodegradant composition according to any one of the preceding claims.

10. A photodegradable polymer composition according to claim 9 wherein the polymer is selected from the group consisting of polyethylene, polypropylene and poly(1-butene).

**Patentansprüche**

1. Photodegradationsmittel enthaltend eine Photodegradationsverbindung und eine Photostabilisatorverbindung, in welchem
(a) die Photodegradationsverbindung einen Komplex aus (i) Kupfer und (ii) einem Keton, welches mehr als eine Carbonylgruppe und ein zur Bildung eines Keto-Enol-Tautomeren des Ketons verfügbares α-Wasserstoffatom besitzt, enthält,
(b) die Photostabilisatorverbindung einen Komplex aus (i) Zink und (ii) einer Alkyldithosäure enthält und
(c) die Photodegradationsverbindung und die Photostabilisatorverbindung in einem relativen Gewichtsverhältnis von 5:95 bis 95:5 vorhanden sind.

2. Mittel nach Anspruch 1, in welchem das Keton ein Diketon ist.

3. Mittel nach Anspruch 2, in welchem das Diketon die Struktur

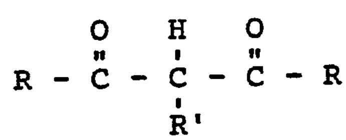

hat, in der jedes R unabhängig gewählt ist aus organischen $C_1$ bis $C_{18}$-Gruppen oder für R′=H aus organischen $C_1$ bis $C_{22}$-Gruppen, und in der R′ gewählt ist aus Wasserstoff und organischen $C_1$ bis $C_{18}$-Gruppen.

4. Mittel nach Anspruch 3, in welchem das Diketon die Struktur

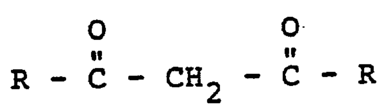

hat, in der jedes R unabhängig gewählt ist aus organischen $C_1$ bis $C_{22}$-Gruppen.

5. Mittel nach Anspruch 3, in welchem jedes R unabhängig aus $C_1$ bis $C_6$-Alkylgruppen gewählt ist.

6. Mittel nach Anspruch 5, in welchem die Photodegradationsverbindung Kupferacetylacetonat ist.

7. Mittel nach einem der vorangehenden Ansprüche, in welchem die Komponente (ii) der Photostabilisatorverbindung Dialkyldithiocarbaminsäure ist.

8. Mittel nach Anspruch 7, in welchem die Photostabilisatorverbindung Zinkdimethyldithiocarbamat ist.

9. Photodegradierbare Masse enthaltend ein Polymer und von 0,001 bis 1 Gew.% eines Photodegradationsmittels nach einem der vorangehenden Ansprüche.

10. Photodegradierbare Polymermasse nach Anspruch 9, in welcher das Polymer gewählt ist aus der Gruppe bestehend aus Polyethylen, Polypropylen und Poly(1-buten).

**Revendications**

1. Une composition photosensibilisante comprenant un composé photostabilisant et un composé photostabilisant, caractérisée en ce que:

a. le composé photosensibilisant comprend un complexe (i) du cuivre et (ii) d'une cétone ayant plus d'un groupe carbonyle et un atome d'hydrogène en α disponible pour que la cétone puisse former un tautomère céto-énol;

b. le composé photostabilisant comprend un complexe (i) du zinc et (ii) d'un alkyldithio-acide; et

c. le composé photosensibilisant et le composé photostabilisant sont présents selon un rapport pondéral relatif de 5:95 à 95:5.

2. Une composition suivant la revendication 1, caractérisée en ce que la cétone est une dicétone.

3. Une composition suivant la revendication 2, caractérisée en ce que la dicétone a la structure:

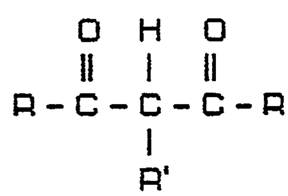

dans laquelle chaque R est choisi indépendamment parmi des groupes organiques en $C_{1-18}$ ou, pour R′=H, parmi des groupes organiques en $C_{1-22}$, et R′ est choisi parmi un atome d'hydrogène ou un groupe organique en $C_{1-18}$.

4. Une composition suivant la revendication 3, caractérisée en ce que la dicétone a la structure

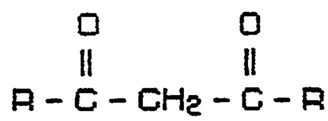

dans laquelle chaque R est choisi indépendamment parmi des groupes organiques en $C_{1-22}$.

5. Une composition suivant la revendication 3, caractérisée en ce que chaque R est choisi indépendamment parmi des groupes alkyles en $C_{1-6}$.

6. Une composition suivant la revendication 5, caractérisée en ce que le photosensibilisant est l'acétylacétonate de cuivre.

7. Une composition suivant l'une quelconque des revendications précédentes, caractérisée en ce que le composant (ii) du photostabilisant est un acide dialkyldithiocarbamique.

8. Une composition suivant la revendication 7, caractérisée en ce que le photostabilisant est le diméthyldithiocarbamate de zinc.

9. Une composition photodégradable de polymère, caractérisée en ce qu'elle comprend un polymère et de 0,001 à 1% en poids d'une composition photosensibilisante suivant l'une quelconque des revendications précédentes.

10. Une composition photodégradable de polymère suivant la revendication 9, caractérisée en ce que le polymère est choisi dans le groupe comprenant un polyéthylène, un polypropylène et un poly(1-butène).